# EUROPÄISCHE PATENTSCHRIFT

(11) **EP 3 449 551 B1**
(45) Veröffentlichungstag und Bekanntmachung des Hinweises auf die Patenterteilung: **29.06.2022**
(21) Anmeldenummer: 17730050.6
(22) Anmeldetag: 13.04.2017
(51) Int. Cl.: H02K 7/06, H02K 7/10, F16B 21/12, F16B 21/18

(54) **STELLANTRIEB MIT SICHERUNGSMITTEL GEGEN RADIALE DEMONTAGE EINES SICHERUNGSELEMENTS, WIE Z.B. EINER SICHERUNGSSCHEIBE, EINES SICHERUNGSSTIFTS, USW.**
ACTUATOR WITH SECURING MEANS AGAINST RADIAL REMOVAL OF A SECURING ELEMENT, SUCH AS, FOR EXAMPLE, A SECURING DISC, A SECURING PIN, ETC.
MÉCANISME DE COMMANDE COMPORTANT UN ÉLÉMENT DE FIXATION CONTRE LE DÉMONTAGE RADIAL D'UN ÉLÉMENT DE FIXATION TEL QUE PAR EX. D'UNE PLAQUE DE FIXATION, D'UNE TIGE DE FIXATION ETC.

(30) Priorität: 27.04.2016 DE 102016207155
(43) Veröffentlichungstag der Anmeldung: 06.03.2019
(73) Patentinhaber: Bühler Motor GmbH, 90459 Nürnberg (DE)
(72) Erfinder: AVDUSINOVIC, Toni, 90473 Nürnberg (DE)
(86) Internationale Anmeldenummer: PCT/DE2017/200033
(87) Internationale Veröffentlichungsnummer: WO 2017/186240

(56) Entgegenhaltungen:
- GB-A- 2 321 945
- US-A- 5 127 764
- Buehlermotor: "Take a Seat In Cooperation with Dornier Technologie Systems GmbH PAXCOM - Seat Control and Actuation System", , 27. Juli 2017 (2017-07-27), Seiten 1-20, XP055394440, Gefunden im Internet: URL:http://www.buehlermotor.de/C12572C6002 47071/vwContentByKey/DFE44BE1410B7D5DC1258 081004C9171/$FILE/Buehler Motor_PAXCOM_EN.pdf [gefunden am 2017-07-27]

## Beschreibung

Die Erfindung betrifft einen Linearstellantrieb (1) für Flugzeugsitze, mit einem Elektromotor, einem Getriebegehäuse (21), in dem ein Untersetzungsgetriebe, eine Kupplung (10) und eine manuelle Entkupplungsmechanik (2) aufgenommen sind, umfassend einen Stößel (4), eine Kupplungsfeder (3), und einer Federhaltescheibe (5), die um den Stößel (4) herum montiert sind, und ein Sicherungselement (6), welches in einer Nut (19) des Stößels (4) angeordnet ist.

Bei einem bekannten Stellantrieb der Anmelderin ist eine Federhaltescheibe mit nur einem Rand ausgebildet, dieser dient lediglich der einfacheren Montage der Kupplungsfeder. Die Sicherungsscheibe 6 ist ohne zusätzliche Sicherung montiert. Bei starken Erschütterungen, Schlägen etc. ist jedoch nicht sichergestellt, dass die Sicherungsscheibe unter allen Toleranzbedingungen in der montierten Stellung verbleibt. In diesem Fall ist die Entkupplungsmechanik nicht mehr funktionstüchtig. Die US 5 127 764 A offenbart einen Elektromotor umfassend einen Halter oder einen Spreizverhinderer (40), um zu verhindern, dass sich ein Clipring, der an einer gerillten Welle angebracht ist oder für ähnliche Zwecke verwendet wird, aus einer Nut an der Welle herausbewegt. Die Welle hat einen mit einem Gewinde vorgesehenen Endabschnitt, an dem eine Innengewindemutter festgezogen wird und eine feste Stützplatte, die auf der Welle axial gelagert ist.

Aus der GB 2 321 945 A ist ein Verbrennungsmotor und eine Methode zum Montieren eines Antriebsrades an einer Welle bekannt. Der Verbrennungsmotor umfasst eine Welle und ein Antriebsrad, das antriebsmäßig darauf gehalten ist, wobei die Welle einen Endabschnitt aufweist, der in einer männlichen Antriebseinrichtung ausgebildet ist; eine umlaufende Nut, die in der männlichen Antriebseinrichtung ausgebildet ist, in welcher ein Ring gespannt gehalten ist, wobei ein Federring einen maximalen Durchmesser aufweist, der größer als der minimale Durchmesser der männlichen Antriebseinrichtung ist, wobei das Antriebsrad eine darin ausgebildete weibliche Antriebseinrichtung aufweist, die einen geringeren Durchmesser aufweist als der maximale Durchmesser des Federrings, so dass der Federring bei vollständigem Eingriff des Antriebsrades mit der männlichen Antriebseinrichtung mit dem Antriebsrad in Eingriff steht, um dadurch das Antriebsrad auf der Welle zu halten.

Aufgabe der Erfindung ist es bei einem gattungsgemäßen Linearstellantrieb dafür zu sorgen, dass auch bei rauen Umgebungsbedingungen stets eine zuverlässige mechanische Verbindung der Entkupplungsmechanik gewährleistet ist, wobei möglichst keine zusätzlichen Teile notwendig werden und eine wirtschaftliche Herstellung und Montage möglich ist.

Diese Aufgabe wird erfindungsgemäß durch die Merkmale des Anspruchs 1 gelöst. Durch die besondere Form der Federhaltescheibe ist eine stets zuverlässige Befestigung der Sicherungsscheibe gegeben, auch unter rauen Bedingungen, wie unter Vibrations- und Stoßbelastung. Da die Federhaltescheibe selbst als Sicherungsmittel dient, ist kein zusätzliches Teil notwendig, wodurch eine wirtschaftliche Herstellung gegeben ist.

Weiterbildungen der Erfindung werden in den Unteransprüchen dargestellt. Durch einen Fügerand lässt sich, wie im Stand der Technik bekannt, die Montage der Kupplungsfeder einfacher ausführen. Die erfindungsgemäße Federhaltescheibe unterscheidet sich von der bekannten Ausführung durch einen Sicherungsrand. Dieser dient als einfache Möglichkeit das Sicherungselement gegen ungewollte radiale Demontage zu sichern. Hierzu ist der Sicherungsrand auf den Außendurchmesser oder die Länge des Sicherungselements abgestimmt.

Das Sicherungselement ist bevorzugt eine Sicherungsscheibe, welche in einer Nut des Stößels aufgenommen ist. Alternativ ist auch ein Sicherungsstift, ein Splint oder ein Schwerspannstift als Sicherungselement einsetzbar, wobei diese in einem Durchbruch im Stößel aufgenommen sind, der ähnlich einer Querbohrung ausgeführt ist.

Die Federhaltescheibe umfasst neben dem Fügerand und dem Sicherungsrand einen Scheibenabschnitt, der als Anlagefläche für die Kupplungsfeder dient.

Zweckmäßigerweise ist der Fügerand und die Kupplungsfeder auf einer ersten Seite des Scheibenabschnitts und der Sicherungsrand und das Sicherheitselement auf einer gegenüberliegenden zweiten Seite des Scheibenabschnitts der Federhaltescheibe angeordnet.

Ein Ausführungsbeispiel der Erfindung wird nachfolgend anhand der Zeichnung näher erläutert. Es zeigen:
- Fig. 1: einen Teil eines Linearstellantrieb gemäß Stand der Technik,
- Fig. 2: eine räumliche Darstellung einer Sicherungsscheibe gemäß der Erfindung,
- Fig. 3: einen Teil eines erfindungsgemäßen Linearstellantriebs,
- Fig. 4: einen Teil des Linearstellantriebs in einer Montagesituation,
- Fig. 5: einen Teil des erfindungsgemäßen Linearstellantriebs mit Entkupplungshebel,
- Fig. 6: einen Linearstellantrieb mit einem Entkupplungshebel.

Hinweis: Bezugszeichen mit Index und entsprechende Bezugszeichen ohne Apostroph bezeichnen namensgleiche Einzelheiten in den Zeichnungen und der Zeichnungsbeschreibung. Es kann sich darüber hinaus um die Verwendung in einer anderen Ausführungsform, dem Stand der Technik oder einer Variante handeln. Die Ansprüche, die Beschreibungseinleitung, die Bezugszeichenliste und die Zusammenfassung enthalten der Einfachheit halber nur Bezugszeichen ohne Index.

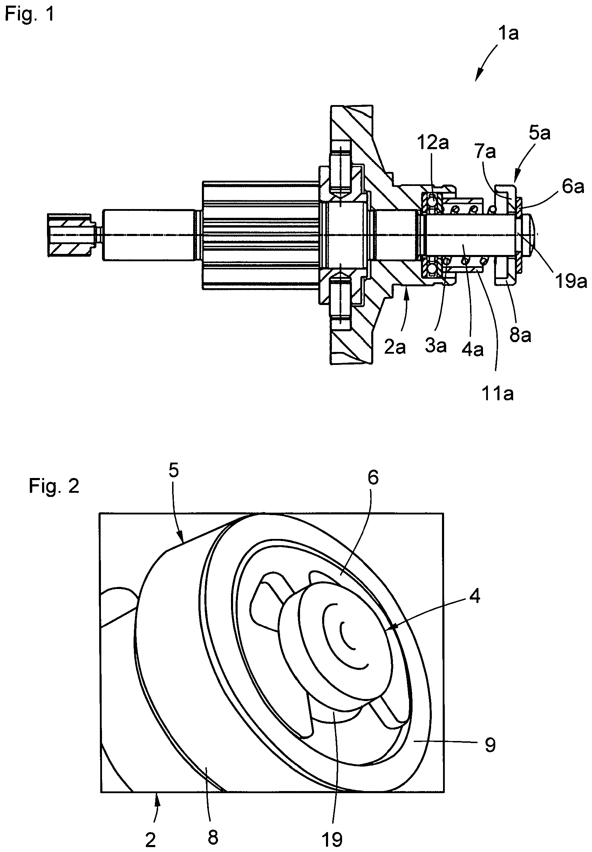

Fig. 1 zeigt einen Teile eines Linearstellantriebs 1a nach dem Stand der Technik, mit einer Kupplungsmechanik 2a, umfassend eine Kupplungsfeder 3a, einen Stößel 4a, eine Federhaltescheibe 5a, eine Sicherungsscheibe 6a, mit einem Scheibenabschnitt 7a und einem Fügerand 8a. Die Federhaltescheibe 5a dient dazu eine Kupplungsfeder 3a in Axialrichtung vorzuspannen und in diesem Zustand zu halten. Ein Fügerand 8a dient dazu die Kupplungsfeder 3a bei der Montage zu fangen. Die Sicherungsscheibe 6a ist in einer Nut 19a des Stößels 4a radial montiert und hält die Federhaltescheibe in axialer Richtung. Weiter ist ein hülsenförmiger Abstandhalter 11a dargestellt, welcher bei einer mechanischen Betätigung der Kupplung die Axialbewegung des Stößels begrenzt, indem die Federhaltescheibe 5a an dem Abstandhalter zur Anlage kommt. Der Abstandhalter 11a stützt sich an einem Axiallager 12a ab, das in Form eines Axialkugellagers ausgeführt ist.

Fig. 2 zeigt eine räumliche Darstellung eines Teils einer Kupplungsmechanik 2, gemäß der Erfindung, mit einer Federhaltescheibe 5, einem Stößel 4 und einer Sicherungsscheibe 6, welche in einer umlaufenden Nut 19 des Stößels 4 in Axialrichtung formschlüssig und in Radialrichtung kraftschlüssig mit einer Rastkontur gehalten ist. Bei der Sicherungsscheibe 6 handelt es sich um ein standardisiertes Normteil. Die Federhaltescheibe 5 weist auf einer Seite einen Fügerand 8 auf und auf der anderen Seite einen Sicherungsrand 9, welcher auf den Außendurchmesser der Sicherungsscheibe abgestimmt ist und diese radial gegen eine Demontage sichert.

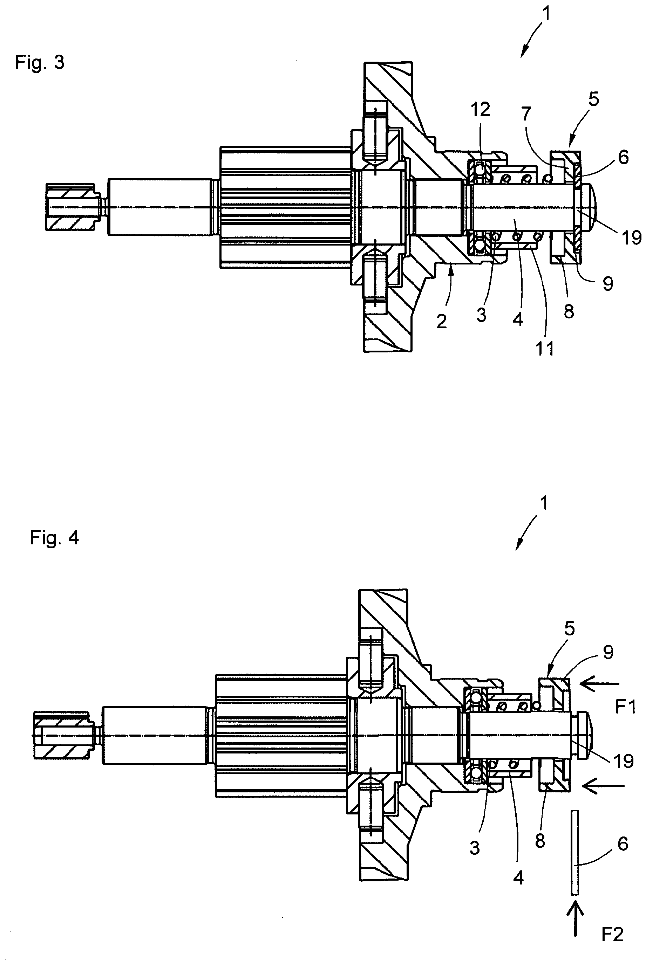

Fig. 3 zeigt einen Teil eines Linearstellantriebs 1 gemäß der Erfindung, mit einer Entkupplungsmechanik 2, welche den Stößel 4 mit der Nut 19, eine Kupplungsfeder 3, die Federhaltescheibe 5 mit dem Fügerand 8 und dem Sicherungsrand 9, die Sicherungsscheibe 6, einen Abstandhalter 11 und ein Axiallager 12 umfasst. Die Federhaltescheibe 5 weist zusätzlich einen Scheibenabschnitt 7 auf welcher die Kupplungsfeder 3 einerseits abstützt. Andererseits wird die Kupplungsfeder 3 am Axiallager 12 abgestützt. Der Scheibenabschnitt 7, der Fügerand 8 und der Sicherungsrand 9 sind als einstückiges Bauteil ausgebildet.

Fig. 4 zeigt einen Teil des Linearstellantriebs 1 in einer Montagesituation, bei der die Federhaltescheibe 5 durch eine Axialkraft F1 gegen die Kraft der Kupplungsfeder 3 axial soweit verschoben ist, dass der Sicherungsrand 9 die Nut 19 zur Montage der Sicherungsscheibe 6 freigibt. Durch eine Radiale Bewegung mit einer Fügekraft F2 kann anschließend die Sicherungsscheibe 6 in die Nut 19 eingeführt und aufgeschnappt werden, bis ein Teil der Sicherungsscheibe 6 in der Nut 19 anschlägt.

Anschließend kann die Kraft F1 wieder verringert werden, so dass die Kupplungsfeder 3 die Federhaltescheibe 5 bis zur Sicherungsscheibe 6 zurückschiebt. Dann ist der Zustand entsprechend Fig. 3 erreicht.

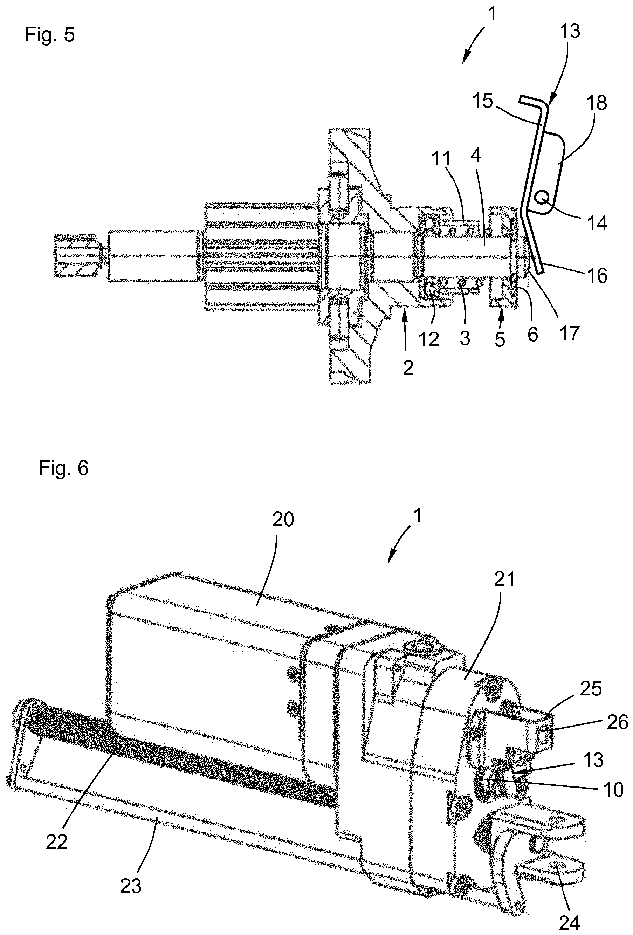

Fig. 5 zeigt die Entkupplungsmechanik 2 als Teil des erfindungsgemäßen Linearstellantriebs 1 mit einem Entkupplungshebel 13, welcher um einen Drehpunkt 14 schwenkbar ist. Ein erster Hebelarm 15 ist dabei mit einem Bowdenzug verbunden (nicht dargestellt) und ein zweiter Hebelarm 16 liegt federbeaufschlagt an einem balligen Ende 17 des Stößels 4 an. Der Entkupplungshebel 13 weist zusätzlich eine Versteifungswange 18 auf, welche abgewinkelt ist und den Drehpunkt 14 umfasst. Weiter sind in Fig. 5 die Kupplungsfeder 3, die Federhaltescheibe 5, die Sicherungsscheibe 6, der Abstandhalter 11 und das Axiallager 12 erkennbar.

Fig. 6 zeigt einen Linearstellantrieb 1 mit dem Entkupplungshebel 13. Der Linearstellantrieb 1 weist auf: einen Elektromotor 20, ein Getriebegehäuse 21, in welchem ein Untersetzungsgetriebe und die erfindungsgemäße Kupplung aufgenommen ist, einer Spindel 22, welche durch eine Mutter als Bestandteil des Untersetzungsgetriebes antreibbar ist, eine Führungsstange 23, ein Gelenk 24 zur Anbindung an den Sitz und ein Abstüztelement 25 für einen Bowdenzug. Das Abstützelement 25 ist im Wesentlichen U-förmig aus einem Blechstreifen gebogen und weist einen Durchbruch für ein Bodenzugkabel auf, dessen Ende mit dem Entkupplungshebel 13 formschlüssig verbunden ist.
- 1: Linearstellantrieb
- 2: Entkupplungsmechanik
- 3: Kupplungsfeder
- 4: Stößel
- 5: Federhaltescheibe
- 6: Sicherungsscheibe
- 7: Scheibenabschnitt
- 8: Fügerand
- 9: Sicherungsrand
- 10: Kupplung
- 11: Abstandhalter
- 12: Axiallager
- 13: Entkupplungshebel 13
- 14: Drehpunkt
- 15: erster Hebelarm
- 16: zweiter Hebelarm
- 17: balliges Ende
- 18: Versteifungswange
- 19: Nut
- 20: Elektromotor
- 21: Getriebegehäuse
- 22: Spindel
- 23: Führungsstange
- 24: Gelenk
- 25: Abstützelement
- 26: Durchbruch

## Patentansprüche

1. Linearstellantrieb (1) für Flugzeugsitze, mit einem Elektromotor (20), einem Getriebegehäuse (21), in dem ein Untersetzungsgetriebe, eine Kupplung (10) und eine manuelle Entkupplungsmechanik (2) aufgenommen sind, umfassend einen Stößel (4), eine Kupplungsfeder (3) und eine Federhaltescheibe (5), die um den Stößel (4) montiert sind, und ein Sicherungselement (6), welches in einer Ausnehmung des Stößels (4) angeordnet ist, wobei das Sicherungselement (6) die Federhaltescheibe (5) in axialer Richtung hält, **dadurch gekennzeichnet dass** die Federhaltescheibe (5) als Sicherungsmittel gegen radiale Demontage des Sicherungselements (6) dient, dass die Federhaltescheibe (5) einen Scheibenabschnitt (7), einen Fügerand (8) und einen Sicherungsrand (9) umfasst und dass der Fügerand (8) und die Kupplungsfeder (3) auf einer ersten Seite des Scheibenabschnitts (7) und der Sicherungsrand (9) sowie die Sicherungsscheibe (6) auf einer gegenüberliegenden zweiten Seite des Scheibenabschnitts (7) angeordnet ist, wobei der Sicherungsrand (9) auf den Außendurchmesser oder die Länge des Sicherungselements (6) abgestimmt ist, um das Sicherungselement (6) gegen ungewollte radiale Demontage zu sichern.

2. Linearstellantrieb nach Anspruch 1, **dadurch gekennzeichnet, dass** das Sicherungselement (6) eine Sicherungsscheibe und die Ausnehmung eine Nut (19) ist.

3. Linearstellantrieb nach Anspruch 1, **dadurch gekennzeichnet, dass** das Sicherungselement (6) ein Sicherungsstift ist.

4. Linearstellantrieb nach Anspruch 1, **dadurch gekennzeichnet, dass** das Sicherungselement (6) ein Splint ist.

5. Linearstellantrieb nach Anspruch 1, **dadurch gekennzeichnet, dass** das Sicherungselement (6) ein Schwerspannstift ist.

6. Linearstellantrieb nach Anspruch 3, 4 oder 5, **dadurch gekennzeichnet, dass** die Ausnehmung im Stößel (4) ein Durchbruch ist - ähnlich einer Querbohrung.

## Claims

1. A linear actuator (1) for aircraft seats, having an electric motor (20), a gear housing (21), in which gear housing there are received a reducing gear, a coupling (10) and a manual uncoupling mechanism (2), comprising a stem (4), a coupling spring (3) and a spring holding disc (5), which are mounted around the stem (4), and a securing element (6) which is arranged in a cutout of the stem (4), wherein the securing element (6) holds the spring holding disc (5) in an axial direction, **characterised in that** the spring holding disc (5) serves as a securing means against radial dismounting of the securing element (6), **in that** the spring holding disc (5) comprises a disc portion (7), a joining edge (8) and a securing edge (9) and **in that** the joining edge (8) and the coupling spring (3) are arranged on a first side of the disc portion (7) and the securing edge (9) and the securing disc (6) are arranged on an opposite second side of the disc portion (7), wherein the securing edge (9) is matched to the outer diameter or the length of the securing element (6) in order to secure the securing element (6) against undesired radial dismounting.

2. A linear actuator according to claim 1, **characterised in that** the securing element (6) is a securing disc and the cutout is a groove (19).

3. A linear actuator according to claim 1, **characterised in that** the securing element (6) is a securing pin.

4. A linear actuator according to claim 1, **characterised in that** the securing element (6) is a split pin.

5. A linear actuator according to claim 1, **characterised in that** the securing element (6) is a heavy type dowel pin.

6. A linear actuator according to claim 3, 4 or 5, **characterised in that** the cutout in the stem (4) is an opening - similar to a transverse bore.

## Revendications

1. Actionneur linéaire (1) pour sièges d'avion, avec un moteur électrique (20), un carter d'engrenage (21) dans lequel sont logés un engrenage réducteur, un accouplement (10) et un mécanisme de désaccouplement manuel (2), comprenant une tige (4), un ressort d'accouplement (3) et une rondelle de retenue de ressort (5), qui sont montés autour de la tige (4), et un élément de blocage (6) qui est disposé dans un évidement de la tige (4), où l'élément de blocage (6) retient la rondelle de retenue de ressort (5) dans la direction axiale, **caractérisé en ce que** la rondelle de retenue de ressort (5) sert de moyen de blocage contre le démontage radial de l'élément de blocage (6), **en ce que** la rondelle de retenue de ressort (5) comprend une section de rondelle (7), un bord de jonction (8) et un bord de blocage (9) et **en ce que** le bord de jonction (8) et le ressort d'accouplement (3) sont disposés sur un premier côté de la section de rondelle (7) et le bord de blocage (9) et la rondelle de blocage (6) sont disposés sur un deuxième côté opposé de la section de rondelle (7), où le bord de blocage (9) est adapté au diamètre extérieur ou à la longueur de l'élément de blocage (6) pour bloquer l'élément de blocage (6) contre un démontage radial involontaire.

2. Actionneur linéaire selon la revendication 1, **caractérisé en ce que** le l'élément de blocage (6) est une rondelle de blocage et l'évidement est une rainure (19).

3. Actionneur linéaire selon la revendication 1, **caractérisé en ce que** l'élément de blocage (6) est une goupille de blocage.

4. Actionneur linéaire selon la revendication 1, **caractérisé en ce que** l'élément de blocage (6) est une goupille fendue.

5. Actionneur linéaire selon la revendication 1, **caractérisé en ce que** l'élément de blocage (6) est une goupille de retenue.

6. Actionneur linéaire selon la revendication 3, 4 ou 5, **caractérisé en ce que** l'évidement dans la tige (4) est une ouverture - semblable à un alésage transversal.
